# EUROPÄISCHE PATENTSCHRIFT

(11) **EP 1 379 801 B1**
(45) Veröffentlichungstag und Bekanntmachung des Hinweises auf die Patenterteilung: **30.11.2005**
(21) Anmeldenummer: 02747278.6
(22) Anmeldetag: 13.04.2002
(51) Int. Cl.: F16K 27/04

(54) **REGELVENTIL**
REGULATOR VALVE
SOUPAPE DE REGULATION

(30) Priorität: 20.04.2001 DE 10119271
(43) Veröffentlichungstag der Anmeldung: 14.01.2004
(73) Patentinhaber: ZF FRIEDRICHSHAFEN Aktiengesellschaft, 88038 Friedrichshafen (DE)
(72) Erfinder: LUTZ, Otto, 88709 Meersburg (DE)
(86) Internationale Anmeldenummer: PCT/EP2002/004124
(87) Internationale Veröffentlichungsnummer: WO 2002/086363

(56) Entgegenhaltungen:
- GB-A- 2 062 186
- US-A- 4 238 112
- US-A- 5 911 407
- PATENT ABSTRACTS OF JAPAN vol. 007, no. 009 (M-185), 14. Januar 1983 (1983-01-14) & JP 57 167571 A (NISSAN JIDOSHA KK), 15. Oktober 1982 (1982-10-15)

## Beschreibung

Die Erfindung betrifft ein Regelventil nach der im Oberbegriff von Anspruch 1 näher definierten Art.

Regelventile, deren Gehäuse mit einem Druckgussverfahren hergestellt werden, weisen durch die Formschrägen im Gehäuse und die dadurch entstehenden unsymmetrischen Steuerkanten eine große Reibungshysterese auf. Ein Regelkolben taucht als Folge davon einseitig in eine Bohrung im Gehäuse ein, wodurch bei Druckbeaufschlagung auf den Regelkolben eine einseitig wirkende Querkraft entsteht. Dadurch ergibt sich eine Reibkraft in Längsrichtung, welche einer Regelkolbenstellkraft immer entgegenwirkt. Dies bedeutet, daß sich beim Annähern an einen Druckpunkt von einem höheren oder niedrigeren Druckniveau aus am Regelventil ein unterschiedlicher Druck einstellt. Zwischen steigendem und fallendem Druck ergibt sich ein Unterschied bezogen auf den gleichen Vorgabewert. Man spricht deshalb von einer Reibungshysterese. Durch die Formschrägen in der Druckgussform ergeben sich zusätzlich große Kolbenwege zwischen den beiden Positionen Regelkante bzw. Entlüftungskante ganz geöffnet. Bei federbeaufschlagten Regelkolben entsteht durch den großen Regelkolbenweg auch ein großer Federkraftunterschied, der zu unterschiedlichen Drücken bei steigendem bzw. fallendem Druckverlauf führt.

In der GB 2 062 186 A ist ein Regelventil mit einem Gehäuse beschrieben, wobei Gehäusekanten von oberen Bohrungshalbkreisen genau senkrecht über Gehäusekanten von unteren Bohrungshalbkreisen stehen, die zunächst schräg ausgebildet sind, und danach in gerade Bohrungen übergehen.

Das aus dem Stand der Technik bekannte Regelventil weist jedoch im Bereich des Regelkolbens parallel ausgeführte Kammern auf, die nicht durch ein Druckgußverfahren hergestellt werden können.

Der vorliegenden Erfindung liegt die Aufgabe zugrunde ein Regelventil darzustellen, das eine kleine Reibungshysterese aufweist und dadurch besonders geeignet ist für hohe Genauigkeitsanforderungen, dabei jedoch gleichzeitig eine kostengünstige und störungsunanfällige Lösung bietet.

Die der Erfindung zugrundeliegende Aufgabe wird durch ein, auch die kennzeichnenden Merkmale des Hauptanspruchs aufweisendes, gattungsgemäßes Regelventil gelöst.

In einem mit einem Druckgussverfahren hergestellten Gehäuse für ein Regelventil werden die Bohrungen vorgegossen. Nach dem Gießvorgang werden immer zuerst die Bohrungen ausgeformt und anschließend werden die Formteile auseinandergezogen. Formschieber, die Steuerkanten abbilden, weisen im Bereich der Bohrungen keine Berührungspunkte mehr mit dem Gehäuse auf, weshalb in diesem Bereich auf Formschrägen verzichtet werden kann. Bei einem erfindungsgemäß hergestellten Regelventil mit einem Gehäuse mit Bohrungen stehen Gehäusekanten von oberen Bohrungshalbkreisen genau senkrecht über Gehäusekanten von unteren Bohrungshalbkreisen. Dies ermöglicht ein leichtes Ausformen der Gussteile. Beim Ausformen der Gussteile berührt eine Bohrungskante des unteren Bohrungshalbkreises der Druckgussform eine Bohrungskante eines oberen Bohrungshalbkreises des Gehäuses. Da sich zum Zeitpunkt des Berührens Gussteil und Druckgussform bereits voneinander gelöst haben, treten hierbei keine Probleme auf. Oberhalb der Bohrungskante des oberen Bohrungshalbkreises des Gehäuses läuft dann die normale Formschräge weiter, so daß in diesem Bereich die gleichen Ausformbedingungen wie bisher bestehen bleiben. Bei dem erfindungsgemäß hergestellten Regelventil tritt infolge der symmetrischen Steuerkanten keine Reibungshysterese auf. Durch die symmetrische Ausführung der Steuerkanten und dem Wegfall der Formschrägen halbiert sich der Weg des Regelkolbens zwischen den beiden Positionen Regelkante bzw. Entlüftungskante ganz geöffnet. Da der Weg des Regelkolbens deutlich reduziert ist, ist auch das Risiko eines Federkraftunterschiedes minimiert, weshalb die Drücke bei steigendem bzw. fallendem Druckverlauf annähernd gleich sind. Im Bedarfsfall können auch Steuerkanten mit größeren Formschrägen ausgebildet werden ohne daß die Funktion des Regelventils darunter leidet. Die Umstellung von der aus dem Stand der Technik bekannten zu der erfindungsgemäßen Ausführung erfordert lediglich eine Umstellung der Werkzeuge.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

Nachfolgend wird die Erfindung anhand eines in den Zeichnungen dargestellten Ausführungsbeispieles näher erläutert.
Es zeigen:
- Fig. 1: den schematischen Aufbau eines aus dem Stand der Technik bekannten und eines erfindungsgemäßen Regelventils,
- Fig. 2: einen Teilausschnitt einer Druckgussform des erfindungsgemäßen Regelventils aus Fig. 1, und
- Fig. 3: einen Teilausschnitt eines Gehäuses des erfindungsgemäßen Regelventils aus Fig. 1.

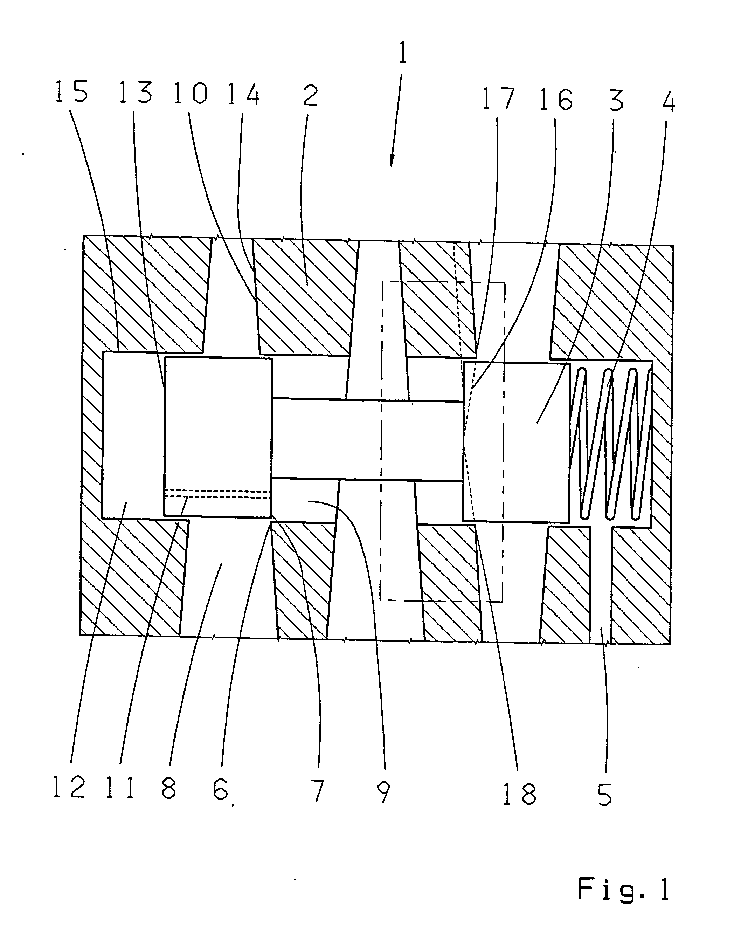

Das in der Fig. 1 dargestellte erfindungsgemäße Regelventil 1 besteht aus einem Gehäuse 2, einem Regelkolben 3 und einer Feder 4. Bei einem konstanten Steuerdruck in einem Druckkanal 5 besteht am Regelkolben 3 ein Kräftegleichgewicht. Wird der Steuerdruck in dem Druckkanal 5 angehoben, so wird der Regelkolben 3 auf seiner rechten Seite zusätzlich mit Druck beaufschlagt, die auf den Regelkolben 3 wirkende Axialkraft erhöht sich, wodurch der Regelkolben 3 nach links verschoben wird. Durch die Verschiebung des Regelkolbens 3 wird die Feder 4 entspannt, die Federkraft nimmt ab. An einer Regelkante 6 öffnet sich als Folge davon ein Spalt 7, sodass Druckmedium von einem Druckraum 8 zu einem Druckraum 9 strömen kann. Aufgrund einer schräg verlaufenden Gehäusekante 10 muss der Regelkolben 3 viel Axialweg zurücklegen, bis sich rundherum ein Öffnungsspalt ergibt. Der Druck in dem Druckraum 9 erhöht sich und wirkt über eine Bohrung 11 im Regelkolben 3 auf einen Druckraum 12 und eine Stirnfläche 13 des Regelkolbens 3. Der sich im Druckraum 12 aufbauende Druck bewirkt bei Überschreiten des Kräftegleichgewichtes ein Verschiebung des Regelkolbens 3 nach rechts. Der Spalt 7 verringert sich dabei kontinuierlich, bis er ganz geschlossen ist. In dem Druckraum 8 stellt sich dann entsprechend dem erhöhten Steuerdruck im Druckkanal 5 ein höherer Regeldruck ein. Fällt der Steuerdruck in dem Druckkanal 5 hingegen ab, so verläuft der Vorgang in umgekehrter Richtung. Eine Steuerkante 14 ist unsymmetrisch ausgebildet und führt somit zu einem einseitigen Eintauchen des Regelkolbens 3 in eine Bohrung 15, wodurch sich bei Druckbeaufschlagung eine einseitig wirkende Querkraft auf den Regelkolben 3 ergibt. Die dadurch entstehende Reibungshysterese wird im Betrieb als sehr störend empfunden. Eine symmetrisch im Gehäuse 2 ausgeführte Steuerkante 16 bewirkt, daß eine Kante 17 eines oberen Bohrungshalbkreises genau senkrecht über einer Kante 18 eines unteren Bohrungshalbkreises steht. Dadurch taucht der Regelkolben 3 gleichmäßig in die Bohrung 15 ein und es stellt sich keine Querkraft ein, die auf den Regelkolben 3 wirken kann.

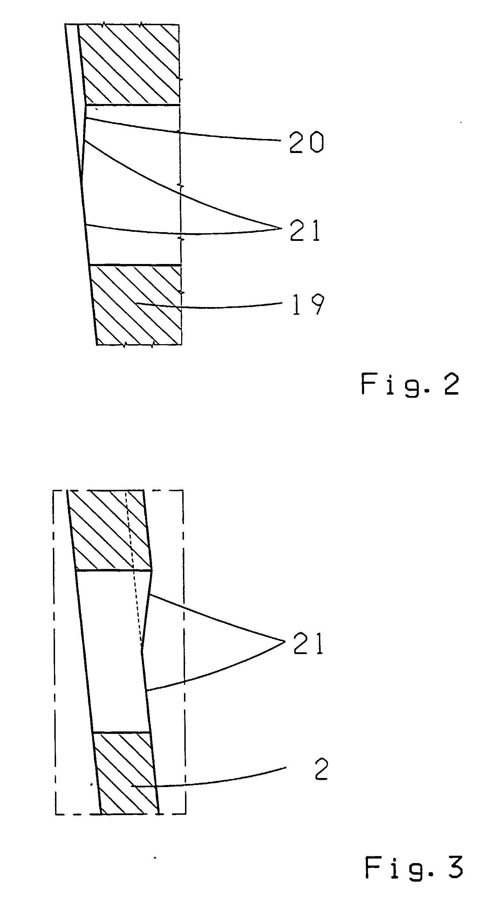

Fig. 2 zeigt einen Teilausschnitt einer Druckgussform 19 eines erfindungsgemäßen Regelventils 1 mit zugehöriger Ausformfläche 20 und symmetrischen Steuerkanten 21.

In Fig. 3 ist ein Teilausschnitt des Gehäuses 2 eines erfindungsgemäßen Regelventils 1 dargestellt. Der Schnitt verläuft durch die Mitte der Bohrung 15. Die Steuerkanten 21 sind entsprechend der in Fig. 2 dargestellten zugehörigen Druckgussform 19 symmetrisch ausgebildet.

### Bezugszeichen

- 1: Regelventil
- 2: Gehäuse
- 3: Regelkolben
- 4: Feder
- 5: Druckkanal
- 6: Regelkante
- 7: Spalt
- 8: Druckraum
- 9: Druckraum
- 10: Gehäusekante
- 11: Bohrung
- 12: Druckraum
- 13: Stirnfläche
- 14: Steuerkante
- 15: Bohrung
- 16: Steuerkante
- 17: Kante
- 18: Kante
- 19: Druckgussform
- 20: Ausformfläche
- 21: Steuerkante

## Patentansprüche

1. Regelventil (1) mit einem durch ein Druckgußverfahren hergestellten Gehäuse (2), mit schräg verlaufenden Gehäusekanten (10) und Steuerkanten (14) und mit einem Regelkolben (3), der durch eine Feder (4) zurückgestellt wird, **dadurch gekennzeichnet, dass** die Gehäusekanten (10) und Steuerkanten (14) so ausgeführt sind, dass sie das Gehäuse (2) ganz durchdringen und dass eine Kante (17) eines oberen Bohrungshalbkreises genau senkrecht über einer Kante (18) eines unteren Bohrungshalbkreises steht, wodurch symmetrische Steuerkanten (16) entstehen.

2. Regelventil (1) nach Anspruch 1, **dadurch gekennzeichnet, daß** im Bereich von Bohrungen auf Formschrägen verzichtet werden kann.

3. Regelventil nach Anspruch 1, **dadurch gekennzeichnet, daß** oberhalb einer Bohrungskante des oberen Bohrungshalbkreises des Gehäuses (2) eine Formschräge besteht.

## Claims

1. Regulating valve (1) with a housing (2) produced by a diecasting method, with obliquely extending housing edges (10) and control edges (4) and with a regulating piston (3) which is returned by a spring (4), **characterised in that** the housing edges (10) and control edges (14) are constructed such that they pass completely through the housing (2), and that an edge (17) of an upper bore semicircle extends exactly perpendicularly above an edge (18) of a lower bore semicircle, resulting in symmetrical control edges (16).

2. Regulating valve (1) according to Claim 1, **characterised in that** there is no need for drafts in the region of bores.

3. Regulating valve according to Claim 1, **characterised in that** there is a draft above a bore edge of the upper bore semicircle of the housing (2).

## Revendications

1. Soupape de réglage (1) comprenant un corps (2) fabriqué par un procédé de coulée sous pression, qui comporte des arêtes de corps (10) s'étendant obliquement et des arêtes de commande (14), et un piston de réglage (3) qui est rappelé par un ressort (4), **caractérisée en ce que** les arêtes de corps (10) et les arêtes de commande (14) sont réalisées de manière à traverser entièrement le corps (2), et **en ce qu'**une arête (17) d'un demi-cercle supérieur du perçage est disposée exactement à la verticale au-dessus d'une arête (18) d'un demi-cercle inférieur du perçage, ce qui donne naissance à des arêtes de commande symétriques (16).

2. Soupape de réglage (1) selon la revendication 1, **caractérisée en ce qu'**on peut se dispenser de dépouilles du moule dans la région des perçages.

3. Soupape de réglage selon la revendication 1, **caractérisée en ce qu'**une dépouille du moule est prévue au-dessus d'une arête de perçage dans le demi-cercle supérieur du perçage du corps (2).
